# EUROPEAN PATENT SPECIFICATION

(11) **EP 0 351 349 B1**
(45) Date of publication and mention of the grant of the patent: **13.01.1993**
(21) Application number: 89630113.2
(22) Date of filing: 07.07.1989
(51) Int. Cl.: B60C 11/06

(54) **Tire tread and tire**
Lauffläche für Reifen
Bande de roulement de pneumatiques

(30) Priority: 11.07.1988 US 217735
(43) Date of publication of application: 17.01.1990
(73) Proprietor: THE GOODYEAR TIRE & RUBBER COMPANY, Akron, Ohio 44316-0001 (US)
(72) Inventor: Adam, Georges, L-7761 Bissen (LU); Lardo, Claude, L-2263 Luxembourg (LU)
(74) Representative: Leitz, Paul

(56) References cited:
- US-A- 2 100 084
- US-A- 2 612 928
- US-A- 4 351 381

## Description

The present invention relates to tire treads and to tires provided with such treads.

The tires employed on the steering axle(s) of a large motor vehicle, such as an over-the-road tractor-trailer rig, present challenges to a tire engineer in regard to fuel economy, uniformity of wear and handling on both wet and dry roadways. Lateral traction characteristics of steer position tires are important for cornering performance. Since steer axles are most often free rolling, (that is to say non-drive) the tires used in these applications tend to exhibit nonuniform wear patterns, especially if the tire tread has a block type design. Furthermore, tires employed on driven axles require good circumferential traction. There is disclosed herein a tread structure which is believed will perform quite adequately when employed in either a non-driven steering position or a driven position on a large motor vehicle. U.S. Patent 2,100,084 shows a pneumatic tire according to the preamble of claim 1 with a tread having circumferentially extending straight grooves and continuous ribs. The ribs are provided with arcuate slits. The objets of the invention is to improve the handling of the prior art tires. According to the present invention this object is achieved by the features of claim 1. The present invention, both as to its structure and manner of operation, may best be understood by reference to the following detailed description, taken in accordance with the accompanying drawings, in which:
Fig. 1 is a fragmented plan view of a tire tread according to the invention;
Fig. 2 is an enlarged plan view of a portion of the tire tread;
Fig. 3 is a cross-sectional view of the tire tread taken at line 3-3 of Fig. 2;
Fig. 4 is a perspective view of the tire tread formed into a ring;
Fig. 5 is a perspective view of a tire having a tread according to the invention; and
Figs. 6 and 7 illustrate features of alternative embodiments.

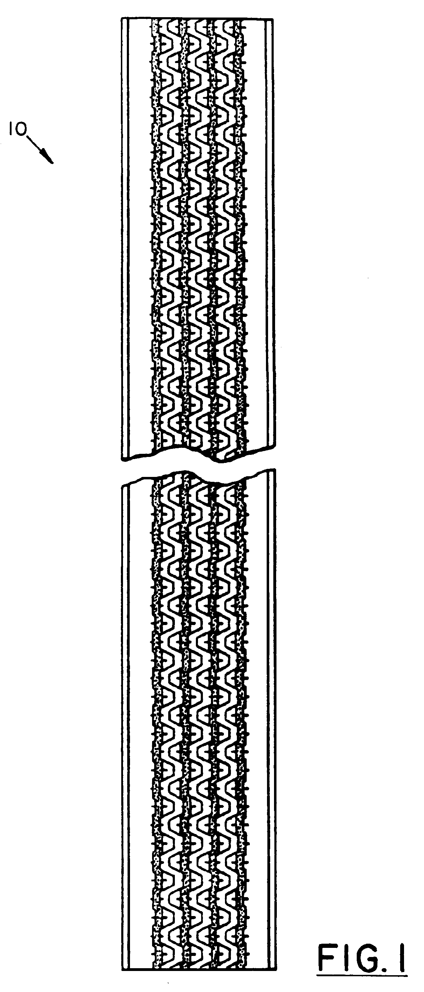

Referring first to Fig. 1, there is shown a plan view of a tire tread 10, fragmented to emphasize that the length of a tire tread is not a limiting factor for the practice of all aspects of the invention. Of course, the controlling factor in tread length is the diameter of a tire that will be mated with the tread. The tire tread 10 illustrated in Fig. 1 is understood to be an elastomeric member which is at least partially vulcanized and has a pattern of grooves and raised elements integral therewith. The elastomeric composition of the tread may include natural rubber, synthetic rubber, a blend of the two, or any other suitable material.

A tire tread 10 according to one aspect of the invention is a strip of at least partially vulcanized material which is suitable for the purpose of providing a new tread for a previously vulcanized tire carcass. Such a tread an article of manufacture which is sometimes referred to in the tire art as precured retread material. Furthermore, it is understood that as used herein and in the claims, the term "tire" refers not only to a newly manufactured tire having a tread and carcass which are vulcanized at the same time, but also to a tire which is manufactured by providing a previously vulcanized carcass with a new tread.

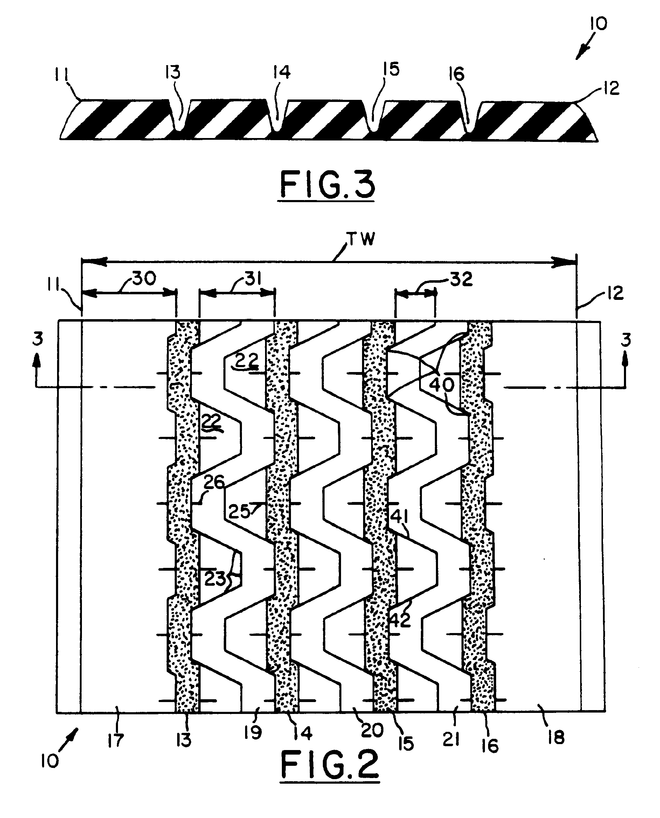

Details of the structure of a tire tread 10 according to the invention, whether it is in the form of precured retread material or a tread which is integral to a tire, can best be described by referring to Figs. 2 to 5.

A precured tire tread 10 has a longitudinal axis and a pair of shoulders 11,12 which define the lateral edges of a ground engageable surface of the tread, while a tire 50 having a tread according to the invention may be described as having a pair of axially spaced apart tread edges 11,12 which define the greatest axial width of the footprint of a tire employing the tread. As used herein, the footprint of a tire is understood to refer to the static contact patch of a tire that is mounted on its specified rim, inflated to its specified inflation pressure, and subjected to its rated load for that specified pressure. The values of these parameters may be determined from the manufacturer of the tire, or from an organization which sets tire industry standards such as The Tire and Rim Association in the U.S.A. or the European Tyre and Rim Technical Organization.

The ground engageable surface of a precured tread has at least three longitudinally extending wide grooves 13,14,15,16 therein which will remain open in a footprint of a tire and which extend the entire length of the tread, while the corresponding grooves 13,14,15,16 of a tread integral to a tire extend circumferentially thereabout. The exact number of said grooves is a factor of the size of the tire which will employ the tread. For example, tires of sizes 315/80R22.5 or 11R22.5 may use treads having four of said grooves therein, as illustrated in Figures 1 to 5. Each said tread shoulder 11,12, or tread edge 11,12, and the nearest longitudinally, or circumferentially, extending wide groove 13,16 cooperate to define a shoulder rib 17,18. While it is preferred that the shoulder ribs 17,18 are not traversed by any grooves, it is understood that treads according to the invention may have circumferentially extending decoupling grooves or even very narrow and shallow laterally extending grooves therein (sometimes called sipes or blades) and still obtain essentially all of the desired benefits of this invention. Interposed between each next-adjacent pair 13,14;14,15;15,16 of longitudinally, or circumferentially, extending wide grooves is a longitudinally, or circumferentially, extending rib 19,20,21 which has a zigzag configuration. A zigzag rib as used herein and in the claims means a rib which has a centerline that follows a nonlinear path on either a precured tread or in a footprint of a tire employing the tread. It is understood that the number of zigzag ribs may vary in accordance with tire size, in the same way as the number of longitudinal or circumferential grooves varies.

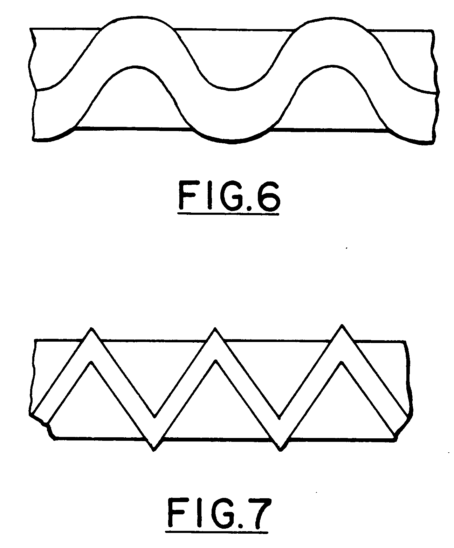

Nested within each reentrant angle of each zigzag rib 19,20,21 is a block element 22, with the block elements being separated from the zigzag rib by narrow grooves 23 which close in a footprint of the tire. Generally speaking, the widths of the narrow grooves should be not greater than 1 mm. It is necessary that the nested block elements be somewhat recessed into the reentrant angles of the zigzag ribs so that the ribs can present rib leading edges 40 to provide improved handling over treads provided with ribs having only smooth lateral edges. The block leading and trailing edges 41,42 of the nested block elements 22 should be oriented at 60° to 70° with respect to the longitudinal axis of a precured tread or the circumferential plane of the tire. As used herein and in the claims, a circumferential plane is a plane that is perpendicular to a tire's axis of rotation. This particular orientation of the edges 41,42 is believed to aid in reducing the noise generated by the tread when a tire is rotated against a roadway. Furthermore, the block elements are retained in a desirable position in a tire footprint by the more stable zigzag rib itself, which aids the performance characteristics of the tire such as lateral traction. While a preferred configuration of ribs and block elements is illustrated herein, it is understood that the zigzag rib and nested block elements could have any other suitable configuration such as those illustrated for example in Figs. 6 and 7.

The narrow grooves 23 separating the block elements 22 from the zigzag ribs 19,20,21 have depths in the range of 40% to 95%, preferably in the range of 50% to 70%, of the depth of the longitudinally or circumferentially extending wide grooves 13,14,15,16. In the preferred embodiment each block element 22 has a narrow notch 25 therein which is longitudinally, or circumferentially, aligned with a narrow notch 26 in the associated zigzag rib 19,20,21. These narrow notches 25,26 have depths in the range of 70% to 95%, preferably in the range of 85% to 95% of the depth of the longitudinally or circumferentially, extending wide grooves. Preferably the depths of the narrow notches 25,26 is greater than the depths of the narrow grooves 23. This preferred feature will allow the wear characteristics of the tread to change throughout its useful life, thereby accommodating more uniform wear patterns in the tread. The widths of the narrow notches 25,26 should be not greater than 1 mm so that the notches will close up in a footprint of a tire.

A tire tread according to the invention has a net-to-gross ratio in the range of 65% to 90%, preferably in the range of 70% to 80%, depending upon the size of the tire. Net-to-gross ratio is the ratio of the actual ground contacting area in a footprint of a tire to the total area of the footprint.

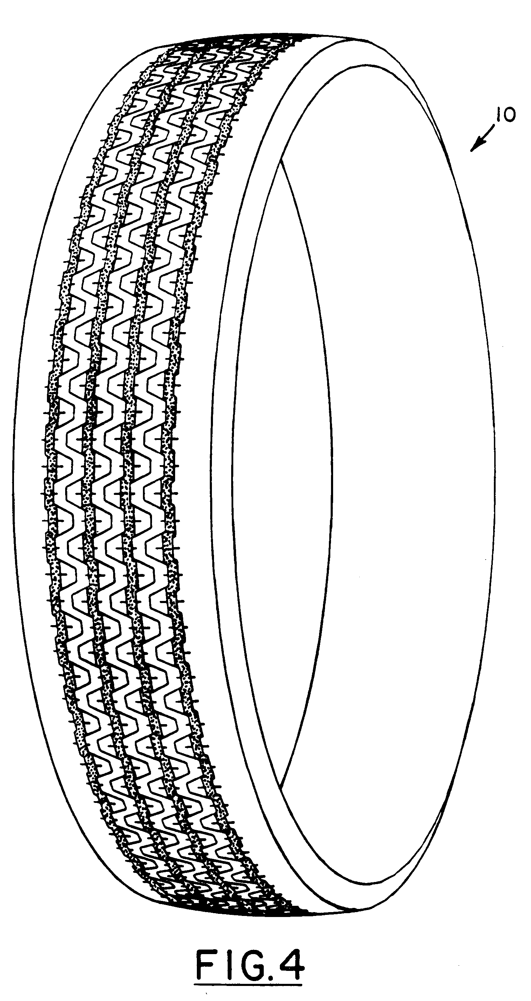

The lateral distance TW between the tread edges, or shoulders, 11,12 is referred to as the tread width TW. If the tread is integral with a tire, the tread width TW may be determined as the greatest axial width of a tire's footprint. The shoulder ribs 17,18 each have a width that is in the range of 15% to 25% of the tread width TW as measured at 30 in Fig. 2. The zigzag ribs 19,20,21 each have a width that is in the range of 15% to 20% of the tread width TW as measured at 31 in Fig. 2. Put another way, the zigzag circumferential ribs 19,20,21 each have an amplitude in the range of 15% to 20% of the tread width TW. The nested block elements 22 each have a lateral, or axial, width in the range of 7% to 10% of the tread width TW as measured at 32 in Fig. 2. Referring to Fig. 4, there is shown a tire tread according to the invention formed into an annular ring. Such treads, known in the art as "ring treads" have been employed in some retreading processes, and are understood to be within the scope of the present invention.

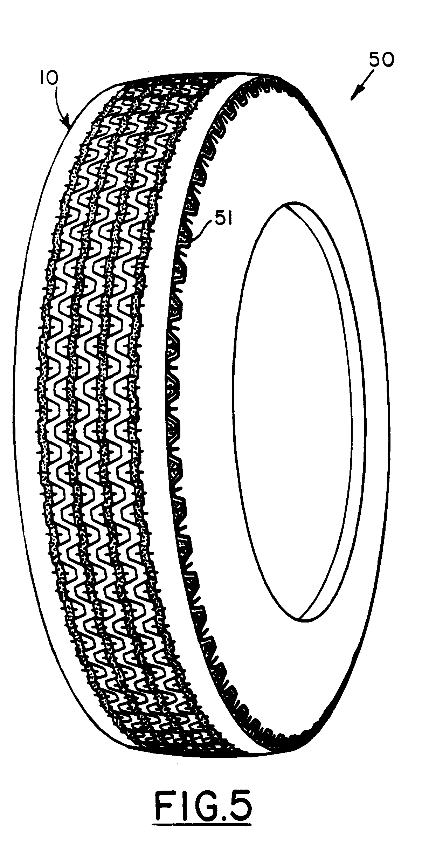

Referring next to Fig. 5, there is shown a tire 50 having a tread 10 according to the invention integral therewith. The tire 50 has an axis of rotation and the tread 10 extends circumferentially about said axis. Preferably, the tire is of the type generally known in the tire art as a radial-ply tire, however, it is understood that the present invention applies also to what is known in the art as a bias ply or bias-belted tire. It is believed that the present invention is most advantageously practiced in radial ply truck tires or precured treads for retreading radial ply truck tires. As illustrated in Fig. 5, the buttresses 51 adjoining the tread itself may have notches or grooves therein, but this is not considered to be essential to the practice of the present invention, and in fact the buttresses may be of a plain configuration as shown in Figs. 1 to 4.

## Claims

1. A tire tread (10) comprising an elastomeric substance and having a longitudinal axis and a pair of shoulders (11,12) which define the lateral edges of a ground engageable surface of the tread, said ground engageable surface having at least three longitudinally extending wide grooves (13,14,15,16) therein which will remain open in a footprint of a tire and which extend the entire length of the tread, each said shoulder (11,12) and the nearest longitudinally extending wide groove (13,16) cooperating to define a shoulder rib (17,18), interposed between each next adjacent pair of longitudinally extending wide grooves (13,14,15,16) is a longitudinally extending rib (19,20,21) which has a zigzag configuration, said tread having a block element (22) nested within each reentrant angle of each zigzag rib (19,20,21), said block elements (22) being separated from the associated zigzag rib (19,20,21) by narrow grooves (23) which will close in a footprint of the tire and which constitutes block leading and trailing edges (41,42), characterized by the block elements (22) being recessed into the reentrant into the reentrant angles of the zigzag ribs (19,20,21) so that each zigzag rib has a rib leading edge (40) and a rib trailing edge (40), each of said block leading and trailing edges (41,42) being aligned with the adjacent rib leading and trailing edge (40) and oriented at 60° to 70° with respect to said longitudinal axis of the tread.

2. A tire tread (10) according to claim 1 characterized by the depth of said narrow grooves (23) being in the range of 40% to 95% of the depth of said longitudinally extending wide grooves (13,14,15,16).

3. A tire tread (10) according to claim 1 characterized by the depth of said narrow grooves (23) being in the range of 50% to 70% of the depth of said longitudinally extending wide grooves (13,14,15,16).

4. A tire tread (10) according to any of the preceding claims characterized by each of said block element (22) having a first narrow notch (25) therein which is longitudinally aligned with a second narrow notch (26) in the associated zigzag rib (19,20,21), said first and second narrow notches (25,26) having depths in the range of 65% to 95% of the depth of said longitudinally extending wide grooves (13,14,15,16).

5. A tire tread (10) according to any of the preceding claims characterized by having a net-to-gross ratio in the range of 70% to 80%.

6. A tire (50) comprising a tread (10) according to any of the preceding claims.

## Patentansprüche

1. Reifenlauffläche (10), die eine elastomere Substanz aufweist und eine Längsachse und ein Paar von Schultern (11,12) hat, die die Querkanten einer Boden-Eingriffsfläche der Lauffläche definieren, wobei die Boden-Eingriffsfläche wenigstens drei sich längs erstreckende weite Nuten (13,14,15,16) darin aufweist, die in einem Abdruck eines Reifens offen bleiben und die sich über die gesamte Länge der Lauffläche erstrecken, wobei jede Schulter (11,12) und die nächste sich längs erstreckende weite Nut (13,16) zusammenwirken, um eine Schulterrippe (17,18) zu definieren, wobei zwischen jedem nächsten benachbarten Paar von sich längs erstreckenden weiten Nuten (13,14,15,16) eine sich längs erstreckende Rippe (19,20,21) zwischengelagert ist, die einen Zickzack-Aufbau hat, wobei die Lauffläche ein Blockelement (22) hat, das mit jedem einspringenden Winkel jeder Zickzack-Rippe (19,20,21) vernetzt ist, wobei die Blockelemente (22) von der zugeordneten Zickzack-Rippe (19,20,21) durch enge Nuten (23) getrennt sind, die sich in einem Abdruck des Reifens schließen und die die Blockführungs- und Endkanten (41,42) bilden, dadurch gekennzeichnet, daß die Blockelemente (22) in die einspringenden Winkel der Zickzack-Rippen (19,20,21) vertieft sind, so daß jede Zickzack-Rippe eine Rippen-Führungskante (40) und eine Rippen-Endkante (40) aufweist, wobei jede der Blockführungs- und Endkanten (41,42) mit der benachbarten Rippenführungs- und Endkante (40) ausgerichtet ist und in 60° bis 70° bezüglich der Längsachse der Lauffläche orientiert ist.

2. Reifenlauffläche (10) nach Anspruch 1, dadurch gekennzeichnet, daß die Tiefe der engen Nuten (23) im Bereich von 40% bis 95% der Tiefe der sich längs erstreckenden weiten Nuten (13,14,15,16) liegt.

3. Reifenlauffläche (10) nach Anspruch 1, dadurch gekennzeichnet, daß die Tiefe der engen Nuten (23) im Bereich von 50% bis 70% der Tiefe der sich längs erstreckenden weiten Nuten (13,14,15,16) liegt.

4. Reifenlauffläche (10) nach einem der vorhergehenden Ansprüche, dadurch gekennzeichnet, daß jedes Blockelement (22) eine erste enge Kerbe (25) darin aufweist, die in Längsrichtung ausgerichtet ist mit einer zweiten engen Kerbe (26) in der zugeordneten Zickzack-Rippe (19,20,21), wobei die erste und zweite enge Kerbe (25,26) Tiefen im Bereich von 65% bis 95% der Tiefe der sich längs erstreckenden weiten Nuten (13,14,15,16) haben.

5. Reifenlauffläche (10) nach einem der vorhergehenden Ansprüche, dadurch gekennzeichnet, daß sie ein Netto-Brutto-Verhältnis im Bereich von 70% bis 80% haben.

6. Reifen (50) mit einer Lauffläche (10) gemäß einem der vorhergehenden Ansprüche.

## Revendications

1. Bande de roulement (10) pour bandage pneumatique, comprenant une substance élastomère et possédant un axe longitudinal et une paire d'épaulements (11, 12) qui définissent les bords latéraux d'une surface de la bande de roulement apte à venir se mettre en contact avec le sol, ladite surface apte à venir se mettre en contact avec le sol possédant au moins en son sein trois larges rainures (13, 14, 15, 16) s'étendant longitudinalement, qui resteront ouvertes dans l'empreinte d'un bandage pneumatique et qui s'étendent sur toute la longueur de la bande de roulement, chacun desdits épaulements (11, 12) et la large rainure la plus proche (13, 16) s'étendant longitudinalement coopérant pour définir une nervure d'épaulement (17, 18); une nervure (19, 20, 21) s'étendant longitudinalement et ayant une configuration en zigzag est intercalée entre chaque paire directement adjacente de larges rainures (13, 14, 15, 16) s'étendant longitudinalement, ladite bande de roulement possédant un élément (22) en forme de bloc logé au sein de chaque angle rentrant de chaque nervure en zigzag (19, 20, 21), lesdits éléments (22) en forme de blocs étant séparés de la nervure en zigzag (19, 20, 21) qui leur est associée par des nervures étroites (23) qui se fermeront dans l'empreinte du bandage pneumatique et qui constituent les bords avant et arrière (41, 42) des blocs, caractérisée en ce que les éléments (22) en forme de blocs sont évidés dans les angles rentrants des nervures en zigzag (19, 20, 21) de telle sorte que chaque nervure en zigzag possède un bord avant de nervure (40) et un bord arrière de nervure (40), chacun desdits bords avant et arrière (41, 42) des blocs se trouvant en alignement avec le bord avant et arrière (40) de la nervure adjacente et étant orienté en formant un angle de 60 ° à 70 ° par rapport audit axe longitudinal de la bande de roulement.

2. Bande de roulement (10) pour bandage pneumatique selon la revendication 1, caractérisée par le fait que la profondeur desdites rainures étroites (23) se situe dans le domaine de 40% à 95% de la profondeur desdites larges rainures (13, 14, 15, 16) s'étendant longitudinalement.

3. Bande de roulement (10) pour bandage pneumatique selon la revendication 1, caractérisée par le fait que la profondeur desdites rainures (23) se situe dans le domaine de 50% à 70% de la profondeur desdites larges rainures ( 13, 14, 15, 16) s'étendant longitudinalement.

4. Bande de roulement (10) pour bandage pneumatique selon l'une quelconque des revendications précédentes, caractérisée par le fait que chacun desdits éléments (22) en forme de blocs possède en son sein une première encoche étroite (25) qui se trouve en alignement longitudinal avec une seconde encoche étroite (26) pratiquée dans la nervure en zigzag (19, 20, 21) qui lui est associée, lesdites première et seconde encoches étroites (25, 26) ayant des profondeurs dans le domaine de 65% à 95% de la profondeur desdites larges rainures (13, 14, 15, 16) s'étendant longitudinalement.

5. Bande de roulement (10) pour bandage pneumatique selon l'une quelconque des revendications précédentes, caractérisée par le fait qu'elle possède un rapport net/brut dans le domaine de 70% à 80%.

6. Bandage pneumatique (50) comprenant une bande de roulement (10) selon l'une quelconque des revendications précédentes.
